# FASCICULE DE BREVET EUROPEEN

(11) **EP 2 771 281 B1**
(45) Date de publication et mention de la délivrance du brevet: **16.05.2018**
(21) Numéro de dépôt: 12794391.8
(22) Date de dépôt: 26.10.2012
(51) Int. Cl.: C02F 1/32, C02F 1/72

(54) **RÉACTEUR UTILISABLE POUR LA DÉCONTAMINATION DES FLUIDES ET PROCÉDÉ D'UTILISATION.**
REAKTOR ZUR DEKONTAMINATION VON FLUIDEN UND VERWENDUNGSVERFAHREN DAFÜR
REACTOR USABLE FOR DECONTAMINATION OF FLUIDS AND METHOD OF USE

(30) Priorité: 27.10.2011 FR 1103273
(43) Date de publication de la demande: 03.09.2014
(73) Titulaire: Institut de Recherche pour le Développement, 13572 Marseille Cedex 02 (FR)
(72) Inventeur: BARBATI, Stéphane, F-13001 Marseille (FR); CHIRON, Serge, F-13011 Marseille (FR); MAHDI AHMED, Moussa, Djibouti (DJ); BOUZIDI, Hichem, F-59500 Douai (FR)
(74) Mandataire: Santarelli
(86) Numéro de dépôt international: PCT/FR2012/052481
(87) Numéro de publication internationale: WO 2013/061007

(56) Documents cités:
- WO-A1-2005/113453
- WO-A2-2007/146671
- DE-A1- 4 109 872
- DE-A1- 4 430 391
- US-A- 5 849 985
- US-A1- 2005 199 483

## Description

La présente demande concerne le domaine de la désinfection et de la dépollution de fluides, et plus particulièrement un procédé de décontamination de liquide contaminé pour diminuer la quantité de composés organiques non biodégradables, ainsi qu'un réacteur pour mettre en oeuvre un tel procédé de décontamination de liquide contaminé.

La contamination des eaux de surface et souterraines par des micropolluants organiques, due à l'activité humaine, constitue aujourd'hui une préoccupation environnementale majeure (qualité des eaux, impact écologique, féminisation des poissons, ...). Les stations d'épuration, réceptacles communs des effluents urbains, industriels et hospitaliers, sont actuellement le moyen de traitement quasi-exclusif des eaux usées. Or, il s'avère que ces stations, basées sur le principe d'une épuration par voie biologique, ne sont pas capables de traiter en totalité les micropolluants qui se retrouvent, par voie de conséquence, avec leurs métabolites dans les eaux naturelles.

La présence de ces composés organiques dans les ressources naturelles pose également des problèmes sanitaires.

Différents procédés ont été décrits dans l'art antérieur pour traiter les eaux usées afin de les réutiliser pour la consommation, l'hygiène, l'industrie ou encore l'agriculture.

Les systèmes de traitement physico-chimiques actuellement disponibles font exclusivement appel à une oxydation par les radicaux hydroxyles générés par le couplage d'une espèce chimique (eau oxygénée ou ozone ou peroxone) avec une méthode d'activation physique par rayonnement électromagnétique. L'un des inconvénients de ces méthodes est qu'elles nécessitent d'ajuster le pH par ajout de quantité importante d'acide (procédé Fenton) ou de base (procédé d'ozonolyse). D'autres procédés et réacteurs utilisent des ions persulfates et une irradiation par un rayonnement UV/visible (WO 2007/146671, DE 4109872, DE 4430391).

Ainsi, il existe un besoin en système de traitement des liquides contaminés qui permettrait de mieux cibler la dégradation de composés organiques non biodégradables et qui ne présenterait pas les inconvénients des procédés existants.

La présente invention vise à fournir un procédé de décontamination de liquide qui peut permettre de mieux cibler la dégradation de composés organiques non biodégradables.

Les inventeurs ont montré, de manière surprenante et après de longues recherches, que le mélange d'un liquide contaminé avec au moins un ion persulfate, en association avec au moins du fer, et une irradiation par un rayonnement UV/visible présentant un spectre étroit de longueur d'onde comprise entre 153 nm et 560 nm, permet en effet de mieux cibler la dégradation des composés organiques non biodégradables en raison de la plus grande sélectivité du radical sulfate par rapport au radical hydroxyle, vis-à-vis des composés organiques non biodégradables ciblés. Ceci s'explique par le fait que la matrice complexe d'une eau, qui contient particulièrement des composés organiques d'origine naturelle, a tendance à inhiber l'action des espèces oxydantes.

C'est un des buts de la présente invention que de fournir un tel procédé.

Par liquide contaminé il est entendu dans le présent texte les eaux usées, civiles ou industrielles, comme celles issues d'un procédé pharmaceutique, hospitalier, cosmétique ou agroalimentaire, contenant des composés organiques non biodégradables. Préférentiellement le liquide peut être de l'eau. Par extension le terme « liquide » englobe les liquides pouvant contenir une phase gazeuse.

Le liquide à décontaminer selon l'invention peut être tout liquide pollué dont la dépollution est nécessaire avant rejet et/ou réutilisation, principalement pour des usages domestiques.

Par composé organique non biodégradable on entend ici tout composé, dont le caractère indésirable peut être dû à sa nocivité (toxicité) pour la santé de l'organisme humain ou animal, non biodégradable, c'est-à-dire non dégradé par les méthodes de dégradation biologique et physico-chimique standard comme par exemple les procédés utilisés dans les stations d'épuration, ces composés pouvant être aussi bien des molécules organiques à base de carbone, d'hydrogène, et éventuellement d'oxygène, et/ou d'hétéroatomes tels que le soufre, l'azote et le phosphore, comme par exemple les substances pharmaceutiques, cosmétiques, les pesticides.

Par liquide décontaminé il est entendu dans le présent texte un liquide dont le taux de composés organiques non biodégradables est acceptable selon les critères fixés par l'utilisation visée du liquide après décontamination. Ceci peut notamment vouloir dire que dans le liquide décontaminé on a réduit au maximum voire supprimé la quantité de composés organiques non biodégradables.

Aussi les inventeurs proposent-ils un procédé de décontamination de liquide utilisable pour décontaminer des liquides contenant des composés organiques non biodégradables ainsi qu'un réacteur pour décontaminer lesdits liquides.

Ainsi l'invention a donc pour premier objet un procédé de décontamination de liquide contaminé par des composés organiques non biodégradables, comprenant les étapes suivantes :
- on mélange sous agitation le liquide contaminé avec au moins un ion persulfate, et au moins du fer à une concentration comprise entre 50µM et 600µM, de préférence entre 100µM et 400µM ;
- on soumet le mélange obtenu pendant un temps suffisant à au moins une irradiation UV/visible présentant un spectre étroit de longueur d'onde comprise entre 153 nm et 560 nm.

Par ion persulfate selon l'invention il est entendu toute forme connue d'ions persulfate, à l'exception du persulfate d'ammonium, et plus particulièrement ceux compris dans la liste suivante : le persulfate de sodium, le persulfate de potassium, le persulfate de baryum. De façon préférée on pourra utiliser comme ion persulfate des ions dont les contre ions ne sont pas toxiques pour l'environnement, comme le persulfate de sodium ou le persulfate de potassium. De façon encore plus préférée on pourra utiliser selon l'invention le persulfate de sodium.

Selon la première étape de l'invention, le mélange est réalisé sous agitation, et permet ainsi d'assurer l'homogénéité du milieu. Le système d'agitation peut être par exemple un système classique à pales. Ce mélange peut être réalisé à une vitesse variant entre 200 et 700 tours/min, préférentiellement entre 400 et 600 tours/min.

Selon l'invention, le pH du mélange obtenu à la première étape du procédé peut se situer entre 1 et 7, préférentiellement entre 2 et 4. En effet, les inventeurs ont observé que la décontamination de liquide contaminé par des composés organiques non biodégradables était plus efficace à un pH compris entre 2 et 4.

Selon l'invention il peut être envisagé de maintenir le pH dans cette fourchette de valeurs, grâce à l'ajout d'acide ou de base au liquide à décontaminer lors de la mise en ouvre du procédé.

Selon l'invention, dans la première étape du procédé on mélange le liquide contaminé avec au moins un catalyseur qui peut être du fer.

Les inventeurs ont en effet montré que la combinaison du système persulfate/fer avec une irradiation UV améliore l'efficacité de la dégradation des composés organiques non biodégradables, et permet d'atteindre des taux de disparition de ceux-ci plus importants. L'utilisation de la lumière UV participe à la photo-réduction des ions fer sous forme ferrique avec production des radicaux hydroxyles supplémentaires et permet la régénération en même temps des ions fer sous forme ferreux nécessaires à l'activation du persulfate.

Par fer selon l'invention il est entendu un atome de fer ou un ion fer sous sa forme ferreux ou ferrique. Des exemples de fer sous forme de fer ferreux peuvent être le sulfate de fer ferreux, le chlorure de fer ferreux, ou encore le double sel de fer ferreux d'ammonium sulfate, préférentiellement le sulfate de fer ferreux. Des exemples de fer sous forme de fer ferrique sont le sulfate de fer ferrique, le nitrate de fer ferrique, le chlorure de fer ferrique, ou encore le double sel de fer ferrique d'ammonium sulfate, préférentiellement le sulfate de fer ferrique. De préférence le fer pourra être utilisé sous sa forme ferreux. Le fer ferreux ou ferrique peut se présenter sous une forme macromoléculaire, micromoléculaire, ou nanoparticulaire. De façon préférentielle, le fer initialement sous forme nanoparticulaire peut être utilisé. En effet, les inventeurs ont montré qu'à même concentration, l'augmentation de surface spécifique de la forme nanoparticulaire permet d'obtenir de biens meilleurs résultats.

Par forme nanoparticulaire il est entendu selon l'invention une taille des nanoparticules comprise entre 40 et 200 nanomètres, préférentiellement entre 60 et 120 nanomètres.

Selon encore l'invention, la concentration en atomes de fer ou ions fer dans le mélange peut se situer entre 50µM et 600µM, de préférence entre 100µM et 400µM.

Selon l'invention, le rapport molaire [concentration initiale en persulfate] /[concentration initiale en fer] peut se situer entre 0,5 et 5, de préférence entre 1 et 3.

Selon l'invention, l'homme du métier saura calculer la concentration en persulfate nécessaire selon l'invention, en fonction de la concentration en fer choisie, et du rapport molaire [concentration initiale en persulfate] /[concentration initiale en fer] souhaité.

Selon une deuxième étape, le mélange obtenu à la première étape est soumis pendant un temps donné à au moins une irradiation UV/visible présentant un spectre étroit de longueur d'onde comprise entre 153nm et 560nm. De façon préférentielle, une longueur d'onde comprise entre 240nm et 300nm, encore plus préférentiellement centrée à 254nm, peut être choisie.

Selon l'invention, l'irradiation UV peut être produite par notamment des lampes, des tubes, des diodes électroluminescentes (DELs). Par temps suffisant selon l'invention, il est entendu le temps nécessaire à l'obtention du niveau de composés organiques non biodégradables dans le liquide décontaminé souhaité, ce niveau pouvant correspondre aux critères souhaités ou imposés pour l'utilisation visée. L'homme du métier saura adapter ce temps grâce à ses connaissances du domaine.

Il est également entendu que le spectre du rayonnement UV peut s'étendre de part et d'autre de ce pic sur 30 nm, avantageusement 10 nm. Ainsi, une lampe UV émettant une lumière présentant un spectre étroit de longueur d'onde centrée à 254 nm, pourra émettre en fait une lumière de longueur d'onde comprise entre 224 nm et 284 nm avantageusement entre 244 nm et 264 nm.

Selon la deuxième étape du procédé de l'invention ledit mélange peut être soumis aux rayonnements UV pendant un temps compris entre 10 minutes et 120 minutes, avantageusement 15 minutes et 60 minutes, très avantageusement entre 15 minutes et 30 minutes.

Selon le procédé, le fluide est mélangé sous agitation avec au moins un ion persulfate, pendant au moins le temps nécessaire pour que le mélange devienne homogène, et éventuellement également pendant le temps de l'irradiation. Cela signifie que la deuxième étape du procédé peut avoir lieu en même temps que la première étape. Selon une autre forme de l'invention, la deuxième étape peut avoir lieu après la première étape, c'est-à-dire que l'agitation est arrêtée quand la deuxième étape commence. Avantageusement les deux premières étapes du procédé peuvent avoir lieu de manière simultanée.

Les inventeurs ont démontré que le procédé de décontamination est encore plus efficace lorsque l'irradiation UV est réalisée par une ou plusieurs diode(s) électroluminescente(s) (DEL). L'utilisation de diodes électroluminescentes (DELs) produisant des radiations UV présentent de nombreux avantages par rapport aux lampes UV. Les DELs émettent à une seule longueur d'onde (elles ne présentent pas un spectre diffus comme les lampes UV mercure moyenne pression) et il est ainsi possible de choisir la ou les longueurs d'onde idoines. Les autres intérêts sont économiques (la durée de vie des DELs est 10 à 100 fois supérieures à celles des lampes). Elles ne produisent que peu de chaleur ; elles ne nécessitent pas beaucoup d'énergie pour fonctionner et le rendement de conversion énergie électrique/dose UV émise est bien supérieur à celui des lampes courantes). Les DELs sont, de plus, résistantes aux chocs et pratiques de mise en oeuvre: il est beaucoup plus facile d'imaginer des configurations nouvelles de réacteurs UV avec des DELs qu'avec des lampes UV du fait de leur faible encombrement, de l'orientation facilitée du rayonnement lumineux, des possibilités d'ajuster le nombre de DEL(s) au débit d'eau à traiter,...). De plus, elles présentent des avantages dans le domaine de la protection de l'environnement : les DELs ne contiennent pas de substances toxiques comme le mercure, et dans le contexte de la directive REACH qui vise notamment à substituer les composés toxiques par des composés moins toxiques, les DELs trouvent toute leur place.

Ainsi, selon une variante de l'invention, dans le procédé l'irradiation peut être réalisée par une ou plusieurs DELs. Les DELs sont de préférence des DELs du commerce. On citera par exemple une DEL-UV émettant à 254 nm. A titre d'exemple on citera les DELs provenant de chez Seoul Optidevice Co., LTD (Corée du Sud), de chez Nichia Corporation (Japon), ou encore de chez SunLED Corporation (Etats-Unis).

Selon une variante de l'invention, il peut être envisagé l'ajout d'une troisième étape au procédé. Cette étape pourrait correspondre à une étape de récupération du liquide décontaminé. Il peut être envisagé que cette étape peut être réalisée par toute technique appropriée permettant une telle récupération. On peut citer par exemple l'une ou plusieurs des méthodes choisies parmi les méthodes de filtration, gravimétrique ou sous pression réduite, de décantation, ou bien encore des méthodes de précipitation suivie d'une filtration gravimétrique.

Les inventeurs ont également démontré l'efficacité d'un réacteur pour la mise en oeuvre d'un procédé de décontamination d'un liquide contaminé.

Ainsi, l'invention a aussi pour objet un réacteur pour la décontamination de liquide, comprenant au moins un moyen d'apport d'au moins un ion persulfate, à l'exception du persulfate d'ammonium, d'au moins un atome de fer ou un ion fer sous sa forme ferreux ou ferrique à une concentration entre 50µM et 600µM, de préférence entre 100µM et 400µM, au moins un moyen de mélange sous agitation dudit liquide, au moins un moyen d'irradiation UV/visible présentant un spectre étroit de longueur d'onde comprise entre 153 nm et 560 nm, préférentiellement entre 240nm et 300nm, préférentiellement centrée à 254nm.

Selon l'invention, l'irradiation UV peut être réalisée par au moins une diode électroluminescente.

Par réacteur on entend un contenant apte à recevoir pendant un temps défini un liquide à décontaminer, ledit contenant comprenant un moyen pour mélanger le liquide avec l'ion persulfate et avec du fer, ledit réacteur étant en outre équipé d'au moins une source de lumière UV dont l'action sur le liquide pourra conduire à la décontamination dudit fluide.

Selon le réacteur de l'invention, l'ajout d'ion persulfate ou de fer, et le mélange du liquide avec l'ion persulfate ou avec du fer peuvent être réalisés dans le réacteur avant l'irradiation UV, ce qui signifie que le liquide est mélangé avec l'ion persulfate ou avec du fer avant d'être irradié, ou alors il peut être prévu que le réacteur puisse permettre l'ajout et le mélange de l'ion persulfate ou avec du fer avec le liquide au même moment qu'a lieu l'irradiation.

Selon une troisième forme de l'invention, l'ajout d'ion persulfate ou de fer peut avoir lieu avant mélange du liquide, le liquide pouvant être mélangé en même temps ou avant l'irradiation. Il peut être également envisagé que l'ajout d'ion persulfate et l'ajout de fer ne soient pas réalisés en même temps. En effet, selon l'invention, le persulfate peut être ajouté au liquide avant, en même temps ou après le fer.

Selon l'invention, la ou les lampes UV pourront être disposées au niveau du réacteur soit de telle sorte qu'elles ne soient pas au contact direct du liquide à décontaminer soit de telle sorte qu'elles soient au contact ou immergées dans ledit liquide.

Selon une variante de l'invention, ledit réacteur peut en outre comprendre au moins une entrée pour le liquide à décontaminer, et au moins une sortie pour le liquide décontaminé. Selon cette variante, l'entrée du liquide et la sortie du liquide peuvent être disposées à des extrémités opposées du réacteur.

La forme, la matière, et les dimensions du réacteur selon l'invention peuvent être quelconques. Ainsi, le réacteur peut prendre toutes les formes voulues et toutes les dimensions voulues, qui seront adaptées par l'Homme du métier en fonction de l'usage envisagé du réacteur selon l'invention.

Comme exemples non limitatifs de matières pouvant constituer le réacteur, on peut citer les polymères (dont les plastiques), le métal, le béton, le verre, le quartz, l'acier inoxydable ou toute combinaison de ces matériaux.

Le réacteur peut en particulier être un récipient, ouvert ou fermé, dans lequel le liquide à décontaminer peut circuler tout en étant mélangé sous agitation avec au moins un ion persulfate, ceci tout en restant au contact d'au moins une source UV/visible émettant une lumière présentant un spectre étroit de longueur d'onde comprise entre 153nm et 560 nm le temps nécessaire à une complète décontamination.

Selon une variante de l'invention le réacteur peut être un réservoir, ouvert ou fermé, dans lequel le liquide à décontaminer est stocké, ledit réservoir étant équipé d'au moins un moyen de mélange sous agitation dudit liquide, au moins un moyen d'apport d'au moins un ion persulfate, au moins une source UV/visible émettant une lumière présentant un spectre étroit de longueur d'onde comprise entre 153nm et 560 nm, préférentiellement entre 240nm et 300nm, préférentiellement centrée à 254nm.

Une forme particulièrement adaptée au réacteur selon l'invention est celle d'un tube dans lequel le fluide pourra circuler, ledit tube portant au moins un moyen d'apport d'au moins un ion persulfate, d'au moins du fer, au moins un moyen pour mélanger, et au moins un moyen d'irradiation UV/visible émettant une lumière présentant un spectre étroit de longueur d'onde comprise entre 153nm et 560 nm, préférentiellement entre 240 nm et 300 nm, sur sa longueur, dans un orifice de sorte que l'émission de lumière se fait vers l'intérieur du tube où circule le fluide à dépolluer. Dans une variante le moyen d'irradiation sera positionné sur un support disposé à l'intérieur dudit tube au contact du fluide à dépolluer.

Selon une autre variante, ledit réacteur pourra en outre comprendre un système pour ajuster le pH, afin de maintenir le pH du liquide mélangé au persulfate à une valeur comprise dans une fourchette allant de 1 à 7, préférentiellement de 2 à 4. Selon une autre variante, ledit réacteur peut également comprendre au moins un moyen de récupération du liquide décontaminé.

Selon l'invention ledit réacteur peut en outre comprendre tout dispositif utile à son bon fonctionnement et/ou à sa sécurité, comme par exemple des vannes d'entrée et/ou de sortie, une vanne d'arrêt de circulation du liquide à décontaminer, une ou des pompe(s) de circulation, un ou des capteur(s) d'intensité lumineuse, un dispositif de mesure de la transmittance ou de la turbidité du liquide à décontaminer, un dispositif de mesure de la pression, ou encore un dispositif de mesure de la température.

### Exemple

### Protocole expérimental :

Une lampe polychromatique à moyenne pression de mercure (Modèle TQ 150 de Heraeus) émettant à des longueurs d'ondes maximales de 254, 273, 313, 366, 406, 436, 546 et 578 nm) est utilisée pour l'irradiation. Celle-ci est préchauffée pendant 10 à 20 minutes pour avoir un flux photonique constant.

Sous irradiation par la lampe on prépare une solution aqueuse de carbamazépine de concentration initiale de 50 µM dont le pH est ajusté à 3 par addition d'un volume adéquat d'une solution d'acide sulfurique à 1 M. La solution est maintenue sous agitation à 500 tours/mn.

On injecte successivement des volumes adéquats de persulfate de sodium et de sulfate de fer ferreux pour avoir une concentration initiale de 200 µM et de 100 µM respectivement.

6 échantillons de concentration en fer ferreux selon le tableau ci-dessous sont préparés avec la solution obtenue précédemment :

| Echantillon | Symbole Figure 1 | [Fe²⁺] = |
|---|---|---|
| (a) | ● | 1 µM, |
| (b) | ○ | 5 µM, |
| (c) | 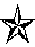 | 12,5 µM, |
| (d) | Δ | 50 µM, |
| (e) | □ | 100 µM, |
| (f) | ▼ | 400 µM. |

Le mélange est maintenu sous irradiation pendant 60 minutes. La concentration en carbamazépine est alors mesurée dans chaque échantillon afin d'étudier l'influence de la concentration en fer ferreux sur la dégradation de la carbamazépine.

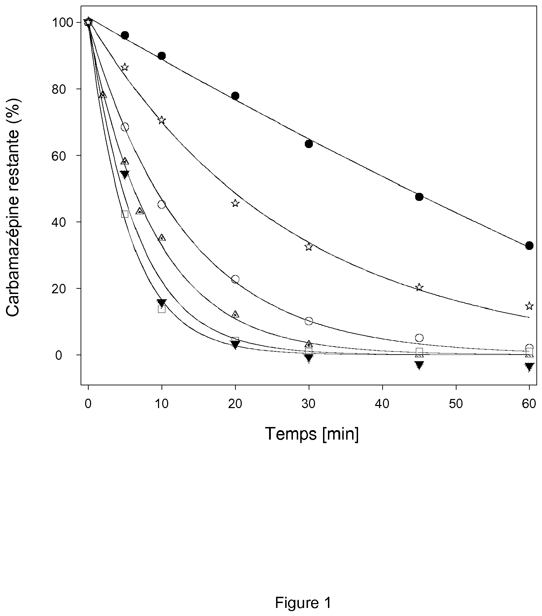

Les résultats sont présentés dans la figure 1.

On note que la quasi-totalité de la carbamazépine est détruite après 30 minutes d'incubation aux concentrations en fer ferreux supérieures à 50 µM.

## Revendications

1. Procédé de décontamination des eaux usées, civiles ou industrielles contaminées par des composés organiques non biodégradables, comprenant les étapes suivantes :
- on mélange sous agitation le liquide contaminé avec au moins un ion persulfate à l'exception du persulfate d'ammonium, et au moins un atome de fer ou un ion fer sous sa forme ferreux ou ferrique, à une concentration entre 50µM et 600µM, de préférence entre 100µM et 400µM ;
- on soumet le mélange obtenu pendant un temps suffisant à au moins une irradiation UV/visible présentant un spectre étroit de longueur d'onde comprise entre 153 nm et 560 nm.

2. Procédé selon la revendication 1, **caractérisé en ce que** dans la première étape le persulfate est choisi parmi le persulfate de sodium, le persulfate de potassium, ou le persulfate de baryum.

3. Procédé selon la revendication 2, **caractérisé en ce que** le persulfate est choisi parmi le persulfate de sodium et le persulfate de potassium.

4. Procédé selon l'une des revendications 2 ou 3, **caractérisé en ce que** le persulfate est le persulfate de sodium.

5. Procédé selon l'une des revendications 1 à 4, **caractérisé en ce que** le pH du mélange obtenu à la première étape du procédé se situe entre 1 et 7, préférentiellement entre 2 et 4.

6. Procédé selon l'une quelconque des revendications 1 à 5, **caractérisé en ce que** dans la première étape le fer est sous forme ferreux.

7. Procédé selon la revendication 1 à 6, **caractérisé en ce que** le fer est sous forme macromoléculaire, micromoléculaire ou nanoparticulaire, préférentiellement sous forme nanoparticulaire.

8. Procédé selon l'une quelconque des revendications 1 à 7, **caractérisé en ce que** le rapport molaire [concentration initiale en persulfate] / [concentration initiale en fer] est compris entre 0,5 et 5, préférentiellement entre 1 et 3.

9. Procédé selon l'une quelconque des revendications 1 à 8, **caractérisé en ce que** l'irradiation UV réalisée à la deuxième étape présente un spectre étroit de longueur d'onde compris entre 240 et 300nm, préférentiellement centrée à 254nm.

10. Procédé selon l'une quelconque des revendications 1 à 9, **caractérisé en ce que** l'irradiation UV est réalisée par au moins une diode électroluminescente.

## Patentansprüche

1. Verfahren zum Dekontaminieren von Haushalts- oder Industrieabwässern, kontaminiert mit organischen, biologisch nicht abbaubaren Verbindungen, das die folgenden Schritte beinhaltet:
- Mischen, unter Rühren, von Flüssigkeit, kontaminiert mit wenigstens einem Persulfation mit Ausnahme von Ammoniumpersulfat, und wenigstens einem Eisenatom oder einem Eisenion in seiner Eisen(II) oder Eisen(III) Form bei einer Konzentration zwischen 50 µM und 600 µM, vorzugsweise zwischen 100 µM und 400 µM;
- Unterziehen des erhaltenen Gemischs, für eine ausreichende Zeit, wenigstens einer Bestrahlung mit UV-/sichtbarem Licht mit einem engen Spektrum mit einer Wellenlänge zwischen 153 nm und 560 nm.

2. Verfahren nach Anspruch 1, **dadurch gekennzeichnet, dass** im ersten Schritt das Persulfat aus Natriumpersulfat, Kaliumpersulfat oder Bariumpersulfat ausgewählt wird.

3. Verfahren nach Anspruch 2, **dadurch gekennzeichnet, dass** das Persulfat aus Natriumpersulfat und Kaliumpersulfat ausgewählt wird.

4. Verfahren nach Anspruch 2 oder 3, **dadurch gekennzeichnet, dass** das Persulfat Natriumpersulfat ist.

5. Verfahren nach einem der Ansprüche 1 bis 4, **dadurch gekennzeichnet, dass** der pH-Wert des im ersten Schritt des Verfahrens erhaltenen Gemischs zwischen 1 und 7, vorzugsweise zwischen 2 und 4 liegt.

6. Verfahren nach einem der Ansprüche 1 bis 5, **dadurch gekennzeichnet, dass** im ersten Schritt das Eisen in der Form von Eisen(II) vorliegt.

7. Verfahren nach Anspruch 1 bis 6, **dadurch gekennzeichnet, dass** das Eisen in makromolekularer, mikromolekularer oder nanopartikulärer Form, vorzugsweise in nanopartikulärer Form vorliegt.

8. Verfahren nach einem der Ansprüche 1 bis 7, **dadurch gekennzeichnet, dass** das Molverhältnis [anfängliche Persulfatkonzentration] / [anfängliche Eisenkonzentration] zwischen 0,5 und 5, vorzugsweise zwischen 1 und 3 liegt.

9. Verfahren nach einem der Ansprüche 1 bis 8, **dadurch gekennzeichnet, dass** die im zweiten Schritt realisierte UV-Strahlung ein enges Wellenlängenspektrum zwischen 240 und 300 nm, vorzugsweise zentriert auf 254 nm hat.

10. Verfahren nach einem der Ansprüche 1 bis 9, **dadurch gekennzeichnet, dass** die UV-Strahlung durch wenigstens eine Leuchtdiode realisiert wird.

## Claims

1. Process for the decontamination of residential or industrial waste water contaminated with non-biodegradable organic compounds, comprising the following steps:
- mixing the contaminated liquid under stirring with at least one persulphate ion, with the exception of ammonium persulphate, and at least one iron atom or one iron ion in its ferrous or ferric form, at a concentration between 50 µM and 600 µM, preferably between 100 µM and 400 µM;
- subjecting the mixture obtained, over a sufficient period of time, to at least one UV/visible irradiation having a narrow wavelength spectrum comprised between 153 nm and 560 nm.

2. Process according to claim 1, **characterized in that** in the first step the persulphate is selected from sodium persulphate, potassium persulphate, or barium persulphate.

3. Process according to claim 2, **characterized in that** the persulphate is selected from sodium persulphate and potassium persulphate.

4. Process according to one of claims 2 or 3, **characterized in that** the persulphate is sodium persulphate.

5. Process according to one of claims 1 to 4, **characterized in that** the pH of the mixture obtained in the first step of the process is situated between 1 and 7, preferentially between 2 and 4.

6. Process according to any one of claims 1 to 5, **characterized in that** in the first step the iron is in ferrous form.

7. Process according to claim 1 to 6, **characterized in that** the iron is in macromolecular, micromolecular or nanoparticulate form, preferentially in nanoparticulate form.

8. Process according to any one of claims 1 to 7, **characterized in that** the molar ratio [initial persulphate concentration] / [initial iron concentration] is comprised between 0.5 and 5, preferentially between 1 and 3.

9. Process according to any one of claims 1 to 8, **characterized in that** the UV irradiation carried out in the second step has a narrow wavelength spectrum comprised between 240 and 300 nm, preferentially centred at 254 nm.

10. Process according to any one of claims 1 to 9, **characterized in that** the UV irradiation is carried out by at least one light-emitting diode.
